# EUROPEAN PATENT APPLICATION

(11) **EP 2 423 845 A2**
(43) Date of publication of application: **29.02.2012**
(21) Application number: 10196362.7
(22) Date of filing: 21.12.2010
(51) Int. Cl.: G06K 7/00

(54) **Economic method for operating a passive tag**

(30) Priority: 26.08.2010 TW 099128559
(71) Applicant: Chung Shan Institute of Science and Technology, Taoyuan County 325 (TW)
(72) Inventor: Chang, Yu-Cheng, Longtan Township Taoyuan County 325 (TW); Lin, Yu-San, 325 Taoyuan County (TW); Chang, Feng-Yu, 325 Taoyuan County (TW)
(74) Representative: Lang, Christian

(57) **Abstract**

Disclosed is an economic method for operating an active tag. The active tag includes a pulse module (10), a power supply module (20) and a signal module (30). The economic method includes the steps of providing a signal to the pulse module so that the pulse module identifies the signal, and providing a trigger signal to the power supply module from the pulse module to instruct the power supply module to energize the signal module so that the active tag is turned to an active state from sleep.

## Description

### BACKGROUND OF INVENTION

### 1 Field of Invention

The present invention relates to an economic method for operating passive tag.

### 2. Related Prior Art

Radio frequency identification ("RFID") has been used in various fields such as management of airborne luggage, inventory, express delivery and libraries, medical management, quality control, security, and automatic charging. In an RFID system, a reader exchanges radio signals with an electronic tag to realize non-contact half-duplex communication of data for the purposes of identification or data exchange.

The electronic tag is active or passive. A passive tag is not equipped with a power supply. A passive tag receives electromagnetic waves from the reader and converts the electromagnetic waves into electricity needed for operation. Therefore, the distance between a passive tag and the reader must be short, e.g., shorter than 10 cm.

An active tag is equipped with a power supply to provide electricity to an internal IC to transmit radio signals. Hence, an active tag can be located at a longer distance from the reader than a passive tag is. It is critical to extend the life of the power supply of an active tag.

To save electricity, a typical active tag includes a microcontroller to periodically actuate a detection circuit to determine whether there is any reader calling. If a reader is calling, the microcontroller actuates a radio transceiver to communicate with the reader. Typically, a transceiver IC is used in an active tag. The transceiver IC, which is sensitive, periodically determines whether there is any reader calling. The life of the power supply is reduced if the period is reduced. The life of the power supply is extended if the period is extended. An extended life of the power supply however entails higher risks of missing a reader that is calling.

The present invention is therefore intended to obviate or at least alleviate the problems encountered in prior art.

### SUMMARY OF INVENTION

It is the primary objective of the present invention to provide an economic method for operating an active tag including a pulse module, a power supply module and a signal module.

To achieve the foregoing objective, the economic method includes the steps of providing a signal to the pulse module so that the pulse module identifies the signal, and providing a trigger signal to the power supply module from the pulse module to instruct the power supply module to energize the signal module so that the active tag is turned to an active state from sleep.

Other objectives, advantages and features of the present invention will be apparent from the following description referring to the attached drawings.

### BRIEF DESCRIPTION OF DRAWINGS

The present invention will be described via detailed illustration of the preferred embodiment referring to the drawings wherein:
FIG. 1 is a block diagram of a circuit for realizing a method for operating an active tag according to the preferred embodiment of the present invention;
FIG. 2 is a circuit diagram of the circuit shown in FIG. 1, with the circuit connected to a double voltage;
FIG. 3 is a circuit diagram of the circuit shown in FIG. 1, with the circuit subjected to a negative current; and
FIG. 4 is a circuit diagram of the circuit shown in FIG. 1, with the circuit subjected to a positive current.

### DETAILED DESCRIPTION OF PREFERRED EMBODIMENT

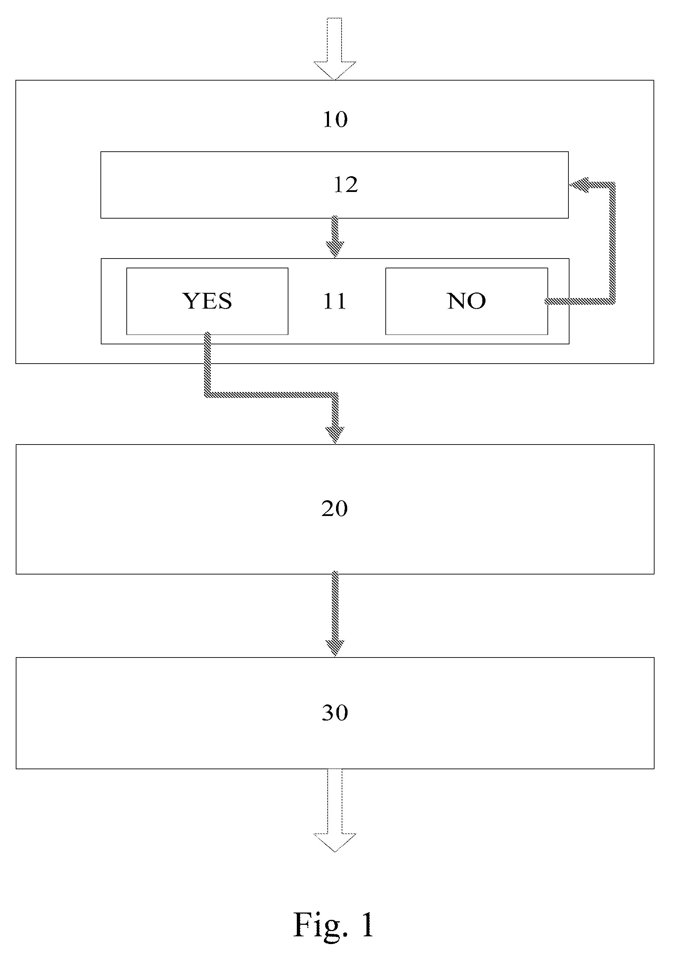

Referring to FIG. 1, there is shown an active tag operated by a method according to the preferred embodiment of the present invention. The active tag includes a pulse module 10, a power supply module 20 and a signal module 30. The pulse module 10 includes a microcontroller 11 to control a database 12. The microcontroller 11 provides a trigger signal for the signal module 30. Thus, interferences due to neighboring signals at the same frequency are avoided, and misjudge or wrong action of the microcontroller 11 I is prevented, and unnecessary consumption of electricity is avoided, i.e., electricity is saved.

The microcontroller 11 periodically determines whether there is a reader calling. If a reader is calling, the microcontroller 11 sends a trigger signal to the power supply module 20 to instruct the supply control module 20 to energize the signal module 30. Otherwise, the microcontroller 11 keeps the power supply module 20 in sleep. Thus, the active tag saves electricity. To further save electricity, the microcontroller 11 turns itself into sleep if it fails to detect any reader for a period of time. The microcontroller 11 can be turned back into the active state from the sleep by a signal from a reader.

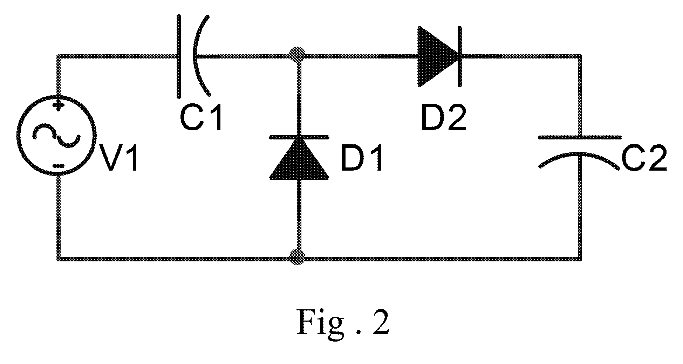

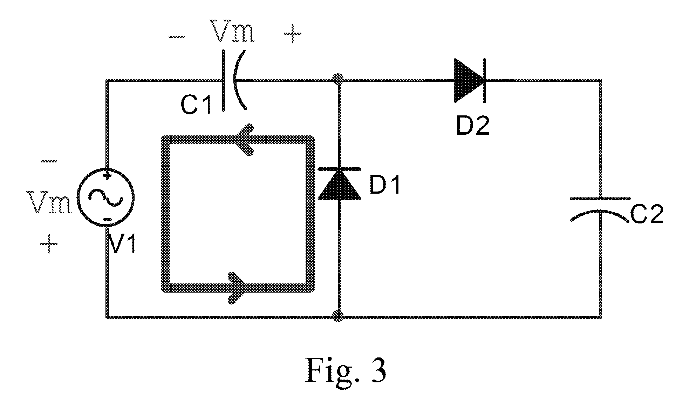

Referring to FIG. 2, the circuit is subjected to a double voltage. Referring to FIG. 3, an alternate voltage supply V1 provides a negative half-periodical output. A diode D1 is on in a positive direction while a diode D2 is off. There is a current in a negative direction indicated by an arrow head. A capacitor C1 is charged to a peak voltage Vm of the voltage supply V1.

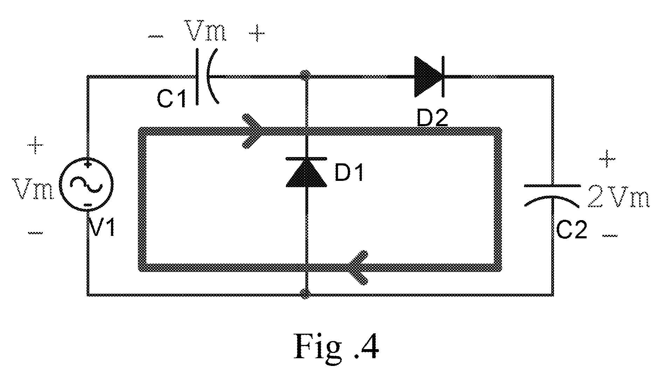

Referring to FIG. 4, the alternate voltage supply V1 provides a positive half-periodical output. The diode D1 is off while the diode D2 is on. There is a current in a positive direction indicated by an arrow head. In addition to the voltage supply V1, the polarity of electricity stored in a capacitor C2 in the negative half-period is identical to that of the voltage supply V1. Hence, the capacitor C2 is charged to 2Vm.

The pulse module 10 is a voltage-multiplier with four stages connected to one another in series. The voltage-multiplier is preferably a voltage-doubler.

As discussed above, the pulse module 10, the power supply module 20 and the signal module 30 are integrated in the circuit of the present invention. The pulse module 10 is connected, in series, to four stages of identical double voltage. A calculation amplifier and a comparator are connected to the out of the fourth stage to provide a trigger signal sufficient for the microcontroller 11 I to determine and a DC voltage level of a baseband. The diodes are those that are typically used in RF/IF power detection to transform the amplitude of a high-frequency signal to a DC voltage level and exhibit an extremely low positive on-state voltage to increase the sensitivity of the circuit. The active tag consumes less than 20 pA.

The present invention has been described via the detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. An economic method for operating an active tag including a pulse module 10, a power supply module 20 and a signal module 30, the economic method including the steps of:
providing a signal to the pulse module 10 so that the pulse module 10 identifies the signal; and
providing a trigger signal to the power supply module 20 from the pulse module 10 to instruct the power supply module 20 to energize the signal module 30 so that the active tag is turned to an active state from sleep.

2. The economic method according to claim 1, wherein the pulse module 10 is a voltage-multiplier with four stages connected to one another in series.

3. The economic method according to claim 2, wherein the voltage-multiplier is a voltage-doubler.

4. The economic method according to claim 1, including the step of providing a microcontroller 11 for the pulse module 10.

5. The economic method according to claim 4, wherein the signal transmitted to the pulse module 10 turns the microcontroller 11 into an active state from sleep.

6. The economic method according to claim 4, including the step of providing a database 12 under the control of the microcontroller 11.

7. The economic method according to claim 1, wherein the active tag consumes less than 20 pA.
